# EUROPÄISCHE PATENTANMELDUNG

(11) **EP 3 993 203 A1**
(43) Veröffentlichungstag der Anmeldung: **04.05.2022**
(21) Anmeldenummer: 21198603.9
(22) Anmeldetag: 23.09.2021
(51) Int. Cl.: H02G 15/113, H02G 15/04, G02B 6/44, E05F 1/06, H02G 15/18, H01R 13/52, H01R 4/64, H01B 7/24, A61M 39/10

(54) **EINZELZUGABDICHTUNG**

(30) Priorität: 30.10.2020 DE 202020106233 U
(71) Anmelder: Hexatronic GmbH, 22941 Bargteheide (DE)
(72) Erfinder: Erdorf, Stefan, 90574 Roßtal (DE)
(74) Vertreter: Lind Edlund Kenamets Intellectual Property AB

(57) **Zusammenfassung**

Die vorliegende Erfindung betrifft eine Einzelzugabdichtung (100) mit einem Dichtelement (170) zum Umschließen eines Kabels oder Kabelrohres und einem das Dichtelement (170) zumindest teilweise umgebenden mehrteiligen Gehäuse (150) mit einem Innenquerschnitt quer zum Kabel oder Kabelrohr, welcher kleiner ist als der Querschnitt des Dichtelements (170) quer zum Kabel oder Kabelrohr, wobei zwei Teile (110, 120) des Gehäuses (150) als Gehäusehälften (110, 120) gelenkig miteinander verbindbar sind, und wobei das Gehäuse (150) von einem Verbindungselement (140) zusammengehalten ist, die sich dadurch auszeichnet, dass eine erste Gehäusehälfte (110) mit wenigstens einem ersten Scharniervorsprung (112) und eine zweite Gehäusehälfte (120) mit wenigstens einem zweiten Scharniervorsprung (122) ausgebildet sind, wobei der erste Scharniervorsprung (112) der ersten Gehäusehälfte (110) und der zweite Scharniervorsprung (122) der zweiten Gehäusehälfte (120) zur Bildung eines Scharniers (160) zusammenfügbar sind, um die erste Gehäusehälfte (110) und die zweite Gehäusehälfte (120) gegeneinander zu verschwenken, wobei der zweite Scharniervorsprung (122) der zweiten Gehäusehälfte (120) wenigstens einen Achsvorsprung (123) aufweist, dessen Achsdurchmesser D2 größer ist als die lichte Weite W des Durchgangs (118) zur wenigstens einen Achsaufnahme (113), die am ersten Scharniervorsprung (112) der ersten Gehäusehälfte (110) ausgebildet ist.

## Beschreibung

Die vorliegende Erfindung betrifft eine Einzelzugabdichtung.

Weiterhin betrifft die Erfindung ein Telekommunikationssystem mit einer solchen Einzelzugabdichtung.

Eine gattungsgemäße Einzelzugabdichtung ist aus der DE 20 2010 015 853 U1 bekannt. Derartige Abdichtungen dienen der Abdichtung von Kabeln, Rohren und Rohren mit Kabeln, insbesondere von Hausanschlüssen. Gerade bei sogenannten Mikro-Kabelrohren werden an die einzusetzenden Einzelzugabdichtungen erhebliche Anforderungen in Bezug auf Wasser- und / oder Gasdichtigkeit und Zugfestigkeiten vorgegeben.

Die vorbekannte Einzelzugabdichtung weist eine Dichtelement zum Umschließen eines Kabels oder Kabelrohres auf und umfasst ein die Dichtelement zumindest teilweise umgebendes mehrteiliges Gehäuse mit einem Innenquerschnitt quer zum Kabel oder Kabelrohr, welcher kleiner ist als der Querschnitt der Dichtelement quer zum Kabel oder Kabelrohr, wobei das Gehäuse von einem Verbindungselement zusammengehalten ist.

Um die geforderten Eigenschaften zu erreichen sind die beiden Hälften des Gehäuses gegenseitig gegeneinander verschwenkbar ausgebildet und können geschlossen und mit einem Verbindungselement verriegelt werden.

Die Verschwenkbarkeit der beiden Hälften des Gehäuses wird durch eine Achse, die in dafür vorgesehenen Lageraugen am Gehäuse geführt ist, ermöglicht.

Dies ist in der Ausführung, im Bedarf an Bauteilen und in der Montage aufwendig, und somit auch kostenintensiv.

Hier setzt die Erfindung ein, deren Aufgabe es ist, eine Einzelzugabdichtung weiterzuentwickeln und die vorstehend genannten Nachteile zu überwinden.

Eine weitere Aufgabe der vorliegenden Erfindung ist es, ein Telekommunikationssystem bereitzustellen.

Die erste Aufgabe wird für eine Einzelzugabdichtung mit technisch einfachen Mitteln mittels der Merkmale des Anspruchs 1 gelöst.

Erfindungsgemäß ist hierzu vorgesehen, dass die Einzelzugabdichtung, welche ein Dichtelement zum Umschließen eines Kabels oder Kabelrohres und ein das Dichtelement zumindest teilweise umgebendes mehrteiliges Gehäuse mit einem Innenquerschnitt quer zum Kabel oder Kabelrohr, welcher kleiner ist als der Querschnitt des Dichtelements quer zum Kabel oder Kabelrohr, aufweist, wobei zwei Teile des Gehäuses als Gehäusehälften gelenkig miteinander verbindbar sind, und wobei das Gehäuse von einem Verbindungselement zusammengehalten ist, die Aufgabe der Erfindung vollständig erfüllt, wenn vorgesehen ist, dass eine erste Gehäusehälfte mit wenigstens einem ersten Scharniervorsprung und eine zweite Gehäusehälfte mit wenigstens einem zweiten Scharniervorsprung ausgebildet sind, wobei der erste Scharniervorsprung der ersten Gehäusehälfte und der zweite Scharniervorsprung der zweiten Gehäusehälfte zur Bildung eines Scharniers zusammenfügbar sind, um die erste Gehäusehälfte und die zweite Gehäusehälfte gegeneinander zu verschwenken, und wobei der zweite Scharniervorsprung der zweiten Gehäusehälfte wenigstens einen Achsvorsprung aufweist, dessen Achsdurchmesser D2 größer ist als die lichte Weite W des Durchgangs zur wenigstens einen Achsaufnahme, die am ersten Scharniervorsprung der ersten Gehäusehälfte ausgebildet ist.

Durch die vorstehend aufgeführten Merkmale der erfindungsgemäßen Einzelzugabdichtung sind die oben geschilderten Nachteile des Standes der Technik überwunden.

Der Vorteil der vorliegenden Erfindung besteht darin, dass durch die vorstehend geschilderten konstruktiven Maßnahmen zum einen eine geringere Anzahl an Bauteilen durch Verzicht der Achse, die bei der Einzelzugabdichtung aus dem Stand der Technik die Verschwenkbarkeit der beiden Hälften des Gehäuses ermöglicht, die in dafür vorgesehenen Lageraugen am Gehäuse geführt ist, benötigt wird, und der Arbeitsgang des Einsteckens der Achse in die Lageraugen nicht mehr stattfindet, was technische und herstellkostenseitige Vorteile mit sich bringt.

Weiterhin sind Vorteile mit einer einfacheren Handhabung des Gehäuses bei der Installation an einem Kabelrohr gegeben, weil die zwei Gehäusehälften durch das "eingeschnappte" Scharnier - das dadurch bereitgestellt ist, dass der zweite Scharniervorsprung der zweiten Gehäusehälfte einen Achsvorsprung aufweist, dessen Achsdurchmesser D2 größer ist als die lichte Weite W des Durchgangs zur Achsaufnahme, die am ersten Scharniervorsprung der ersten Gehäusehälfte ausgebildet ist - nicht auseinanderfallen können, was die Arbeit des installierenden Personals ungemein erleichtert.

Auf diese Weise kann eine schnelle, sichere, fehlerfrei und kostengünstige Installation einer solchen erfindungsgemäßen Einzelzugabdichtung an einem Kabelrohrende vorgenommen werden.

Wesentlich ist dabei auch noch, dass konstruktionsbedingt ein fehlerhafter Zusammenbau der Einzelzugabdichtung aus den beiden Gehäusehälften, dem Dichtungselement und dem Verbindungselement nicht möglich ist, was einer fehlerlosen Installation weiter entgegenkommt.

In einer bevorzugt vorteilhaften Fortbildung der vorliegenden Erfindung kann vorgesehen sein, die Einzelzugabdichtung derartig auszubilden, dass eine Mehrzahl von ersten Scharniervorsprüngen an der ersten Gehäusehälfte und eine Mehrzahl von zweiten Scharniervorsprüngen an der zweiten Gehäusehälfte ausgebildet sind, wobei jeweils eine gleiche Mehrzahl an ersten Scharniervorsprüngen und zweiten Scharniervorsprüngen oder wobei eine ungleiche Mehrzahl an ersten Scharniervorsprüngen und zweiten Scharniervorsprüngen vorliegt.

Durch diese Maßnahme kann eine besonders stabile Einzelzugabdichtung geschaffen werden, die überdies eine hohe Dichtheit aufweist.

Eine weitere günstige Fortbildung der vorliegenden Erfindung kann darin besehen, dass die Einzelzugabdichtung so ausgebildet ist, dass die Mehrzahl an zweiten Scharniervorsprünge an der ersten Gehäusehälfte jeweils gleichgeformt sind.

Dadurch ist eine einfache Konstruktion, Werkzeugfertigung und ein leichter Zusammenbau der Einzelzugabdichtung möglich, was Kosten einsparen kann.

In einer sehr vorteilhaften Fortbildung der vorliegenden Erfindung kann vorgesehen sein, die Einzelzugabdichtung derartig auszubilden, dass die Mehrzahl zwei oder drei oder vier oder fünf oder sechs oder sieben oder acht beträgt.

Durch diese Maßnahme kann eine Einzelzugabdichtung bereitgestellt werden, die genau an die technischen Anforderungen oder die Anforderungen des Kunden angepasst ist.

Erfindungsgemäß ist eine äußerst vorteilhafte Ausbildung der Einzelzugabdichtung dergestalt, dass an der ersten Gehäusehälfte drei erste Scharniervorsprünge ausgebildet sind, die jeweils zwei Achsaufnahmen aufweisen. Die beiden äußeren den Stirnseiten der ersten Gehäusehälfte zugewandten Achsaufnahmen sind so ausgebildet, dass die lichte Weite W des Durchgangs zu diesen beiden Achsaufnahmen kleiner ist, als die Achsdurchmesser D2 der Achsvorsprünge der zweiten Scharniervorsprünge, die an der zweiten Gehäusehälfte ausgebildet sind, wovon vier vorhanden sind.

Die restlichen vier Achsaufnahmen an den ersten Scharniervorsprüngen der ersten Gehäusehälfte weisen keine lichte Weite W des Durchgangs zu diesen Achsaufnahmen auf, die kleiner ist, als die Achsdurchmesser D2 der Achsvorsprünge der zweiten Scharniervorsprünge, die an der zweiten Gehäusehälfte ausgebildet sind, sondern weisen eine lichte Weite des Durchgangs auf, der geringfügig größer ist, als der Achsdurchmesser D2 der Achsvorsprünge.

Diese Maßnahme hat fertigungstechnische Gründe, da so mit einem relativ einfachen Werkzeug die Einzelzugabdichtung der vorliegenden Erfindung mit Kostenvorteilen zu fertigen ist, die die Anzahl an Schiebern am Spritzgusswerkzeug begrenzt ist. Erfindungsgemäß kann aber auch vorgesehen sein, dass jede denkbare Kombination an Anzahlen gemäß vorstehend genannter Mehrzahl von ersten Scharniervorsprüngen an der ersten Gehäusehälfte und zweiten Scharniervorsprüngen an der zweiten Gehäusehälfte möglich ist, solange die Voraussetzung erfüllt ist, dass die lichte Weite W des Durchgangs zu wenigstens einer Achsaufnahme, die am ersten Scharniervorsprung der ersten Gehäusehälfte ausgebildet ist, kleiner ist, als der Achsdurchmesser D2 des wenigstens einen Achsvorsprungs, der am zweiten Scharniervorsprung der zweiten Gehäusehälfte ausgebildet ist.

Erfindungsgemäß kann also vorgesehen sein, dass bei einer Mehrzahl an ersten Scharniervorsprüngen und zweiten Scharniervorsprüngen gemäß vorstehender Beschreibung die vorgenannte Bedingung eine Kombination aus lichter Weite W des Durchgangs und aus dem Achsdurchmesser D2 stets zumindest in einer Kombination realisiert sein muss, dies kann aber auch bei einigen Kombinationen oder bei allen Kombinationen realisiert sein.

Je nach technischem Aufwand an den zur Herstellung der Gehäusehälften eingesetzten Werkzeugen kann also vorgesehen sein, dass eine lichte Weite W des Durchgangs zu einer Achsaufnahme an einem ersten Scharniervorsprung der ersten Gehäusehälfte kleiner ist, als der Achsdurchmesser D2 des Achsvorsprungs, der am zweiten Scharniervorsprung der zweiten Gehäusehälfte ausgebildet ist.

Dies kann aber ebenso mehrere oder alle Achsaufnahmen betreffen.

Erfindungsgemäß ist vorgesehen, dass alle Achsdurchmesser D2 der Achsvorsprünge gleich sind und ebenso, dass alle Achsaufnahmedurchmesser D1 der Achsaufnahmen gleich sind, was die Konstruktion und Werkzeugherstellung wesentlich erleichtert.

Es liegt auch im Rahmen der Erfindung, die Einzelzugabdichtung so auszugestalten, dass an der ersten Gehäusehälfte eine erste Anlagefläche ausgebildet ist, und dass an der Gehäuseaußenoberfläche der ersten Gehäusehälfte der erste Scharniervorsprung angrenzend an die erste Anlagefläche und gegenüberliegend einem ersten Vorsprung an der Gehäuseaußenoberfläche ausgeformt ist.

Weiterhin liegt es im Rahmen der vorliegenden Erfindung vorzusehen, dass an der zweiten Gehäusehälfte der Einzelzugabdichtung eine zweite Anlagefläche ausgebildet ist, und dass an der Gehäuseaußenoberfläche der zweiten Gehäusehälfte der zweite Scharniervorsprung angrenzend an die zweite Anlagefläche und gegenüberliegend einem zweiten Vorsprung an der Gehäuseaußenoberfläche ausgeformt ist.

Hierdurch ist es zum einen möglich, einen sehr platzsparenden Aufbau der Einzelzugabdichtung zu realisieren, da sich das Scharnier und das für den Verschluss des Gehäuses der Einzelzugabdichtung benutze Verbindungselement, das an den Vorsprüngen der Gehäusehälften angreift, einander gegenüberliegen. Zum anderen ist so eine einfache Form der Gehäusehälften möglich, die eine hohe Dichtheit bereitstellt und ein definiertes Schließen des Gehäuses durch die im geschlossenen Zustand des Gehäuses aneinander liegenden ersten und zweiten Anlageflächen der beiden Gehäusehälften zu gewährleisten.

Als besonders günstig kann sich in einer Fortbildung der vorliegenden Erfindung ergeben, wenn vorgesehen ist, dass die Einzelzugabdichtung so ausgestaltet ist, dass der zweite Scharniervorsprung der zweiten Gehäusehälfte, der einen Achsvorsprung aufweist, einen Achsdurchmesser D2 des Achsvorsprungs besitzt, der kleiner ist als der Achsaufnahmedurchmesser D1, den die Achsaufnahme besitzt, die der erste Scharniervorsprung der ersten Gehäusehälfte aufweist.

Damit ist gewährleistet, dass der Achsvorsprung sich in der Achsaufnahme frei und ungehindert drehen kann, wodurch ein leichtes Verschwenken der beiden Gehäusehälften gegeneinander möglich ist.

Mit besonderem Vorteil kann bei der vorliegenden Erfindung vorgesehen sein, die Einzelzugabdichtung so auszugestalten, dass die erste Gehäusehälfte und / oder die zweite Gehäusehälfte und / oder das Verbindungselement aus einem Polymermaterial bestehen oder ein solches enthalten, wobei das Polymermaterial ein Thermoplast ist, und insbesondere ein verstärkter Thermoplast ist.

Bevorzugt ist hierbei ein Polyamid, insbesondere ein Polyamid, das glasfaserverstärkt ist, da dieses besonders zäh ist.

Bevorzugt sind auch Thermoplaste aus der Gruppe der Polyether, der Polycarbonate und der Polyester.

Durch diese Maßnahme kann eine besonders stabile, dauerhafte und ihre Dichtfunktion lange gewährleistende Einzelzugabdichtung bereitgestellt werden.

Als sehr günstig kann sich bei der vorliegenden Erfindung ergeben, wenn die Einzelzugabdichtung derart ausgebildet ist, dass die erste Gehäusehälfte und / oder die zweite Gehäusehälfte und / oder das Verbindungselement durch einen Formprozess hergestellt sind, insbesondere durch einen Spritzgussprozess und / oder durch einen generativen Herstellprozess, wie einen 3D-Druck-Prozess.

Durch die Herstellung in einem Spritzgussprozess können die erste Gehäusehälfte und / oder die zweite Gehäusehälfte und / oder das Verbindungselement in großer Stückzahl, reproduzierbar und maßgenau bereitgestellt werden, wodurch die Kosten dafür gesenkt werden können.

Die Herstellung in einem generativen Herstellprozess, wie beispielsweise in einem 3D-Druck-Prozess, kann insbesondere für kleine Stückzahlen die Herstellkosten deutlich senken, darüber hinaus sind auf diese Weise technische Änderungen sofort ausführbar.

So kann insbesondere vorgesehen sein, dass die erste Gehäusehälfte und / oder die zweite Gehäusehälfte und / oder das Verbindungselement ganz oder teilweise unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für eine erste Gehäusehälfte und / oder eine zweite Gehäusehälfte und / oder ein Verbindungselement. Hierbei umfasst das Verfahren insbesondere auch die Eingabe von Daten, die eine erste Gehäusehälfte und / oder eine zweite Gehäusehälfte und / oder ein Verbindungselement darstellen, in eine Datenverarbeitungsmaschine und die Nutzung der Daten, um eine erste Gehäusehälfte und / oder eine zweite Gehäusehälfte und / oder ein Verbindungselement als dreidimensionales Modell darzustellen, wobei das dreidimensionale Modell geeignet ist zur Nutzung bei der Herstellung einer ersten Gehäusehälfte und / oder einer zweiten Gehäusehälfte und / oder eines Verbindungselements. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf eine erste Gehäusehälfte und / oder eine zweite Gehäusehälfte und / oder ein Verbindungselement abgegeben wird und die reflektierte Energie empfangen wird, und wobei ein virtuelles dreidimensionales Modell einer ersten Gehäusehälfte und / oder einer zweiten Gehäusehälfte und / oder eines Verbindungselements unter Verwendung einer computer-unterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Einzelzugabdichtung kann so weitergebildet sein, dass das Verbindungselement von einem Schieber bereitgestellt ist, der eine Umfangslinie eines Hohlkörpers beschreibt, die eine Aussparung aufweist und mit den die Aussparung definierenden Enden der Umfangslinie je einen Vorsprung je eines aneinander angrenzenden Gehäuseteils umgreift, wobei sich die lichte Weite der Aussparung quer zur Zugkraft ändert. Der Schieber setzt an den Vorsprüngen an, die sich radial auswärts von der Außenseite der Gehäuseteile erstrecken. Die lichte Weite ist zu Beginn so groß, dass das Verbindungselement leicht über beide Vorsprünge anzuordnen ist und die Zugkraft zum Zusammenhalten des Gehäuses mit dem Dichtelement noch klein oder nicht vorhanden ist. Durch weiteres Aufschieben des Schiebers auf die Außenseite in Richtung des anderen Endes der Einzelzugabdichtung verengt sich der Abstand zwischen den definierten Enden des Schiebers. Mit sinkender lichte Weite werden sodann die beiden Teile unter Zugkraft zusammengezogen und umschließen letztlich das Dichtelement.

Zur weiteren Verringerung der Baugröße kann die Einzelzugabdichtung so weitergebildet sein, dass der Schieber ein Rohr mit sichelförmiger Umfangslinie aufweist, dessen Mittellinie einen an das Gehäuse angepassten Radius aufweist und ein Rohrende von einer Schlagfläche abgedeckt ist. Der aufgeschobene Schieber bildet lediglich eine kleine Erhebung an der Außenseite des Gehäuses, da seine eigene Außenseite angepasst ist. Die Schlagfläche vereinfacht die Montage und ermöglicht das Aufbringen höherer Zugkräfte. Die die lichte Weite definierenden Enden des Rohres bilden mit der Mittelinie jeweils einen Winkel von bis zu etwa 5°. Dieser Winkel ermöglicht ein vergleichsweise leichtes Aufschieben und verhindert recht gut das Herunterschieben von den Vorsprüngen.

Die zweite Aufgabe der vorliegenden Erfindung, die Angabe eines Telekommunikationssystems, erfährt ihre Lösung durch den Gegenstand des Anspruchs 10.

Es wurde im Rahmen der vorliegenden Erfindung erkannt, dass ein Telekommunikationssystem mit wenigstens einem Kabelrohr, wenigstens einem Telekommunikationskabel, das zumindest abschnittsweise in dem Kabelrohr aufgenommen ist, und wenigstens einer Einzelzugabdichtung, wie vorstehend beschrieben, die das Ende des Kabelrohrs verschließt, sich über den Stand der Technik erhebt und die vorstehend geschilderten Vorteile positiv nutzen kann.

Die Installation der erfindungsgemäßen Einzelzugabdichtung geschieht dabei wie folgt: Zunächst sind die erste und die zweite Gehäusehälfte unter Ausbildung eines Scharniers so zusammenzufügen, dass die Achsvorsprünge an den zweiten Scharniervorsprüngen der zweiten Gehäusehälfte in die Achsaufnahmen, die an den ersten Scharniervorsprüngen der ersten Gehäusehälfte ausgebildet sind, unter Überwindung der Engstelle der an den zwei Achsaufnahmen vorgesehenen Durchgänge eingeclipst werden. Hierbei wird von einer Einzelzugabdichtung ausgegangen, wie sie vorstehend bereits beschrieben ist, und die drei erste Scharniervorsprünge an der ersten Gehäusehälfte und vier zweite Scharniervorsprünge an der zweiten Gehäusehälfte umfasst.

Hierdurch ist ein Scharnier zwischen der ersten und der zweiten Gehäusehälfte ausgebildet worden, das verhindert, dass die zwei Gehäusehälften, die nun das Gehäuse bilden, auseinanderfallen können.

Zur Vereinfachung der Installation kann das Zusammenfügen der ersten und zweiten Gehäusehälfte bereits bei der Produktion der Gehäusehälften stattfinden, was insbesondere unter Nutzung eines Roboters oder eines Handhabungsautomaten erfolgen kann.

Nach Positionierung des Dichtelements am Kabelrohrende und Positionieren des Telekommunikationskabels aus dem Kabelrohr in dem Dichtelement ist das Dichtelement im Gehäuse zu plazieren und die zwei Gehäusehälften durch Verschwenken um das Dichtelement zu schließen.

Durch Aufschieben des Verbindungselements auf das Gehäuse wird dieses verschlossen und das Dichtelement komprimiert, wodurch es seine Dichtwirkung entfaltet.

Der Vorteil der vorliegenden Erfindung besteht insbesondere darin, dass durch die vorstehend geschilderten konstruktiven Maßnahmen einerseits eine kostengünstigere Produktion durch den Entfall einer gesonderten Achse möglich ist, und andererseits eine einfachere Handhabung des Gehäuses bei der Installation an einem Kabelrohr möglich ist, weil die zwei Gehäusehälften durch das "eingeschnappte" Scharnier nicht auseinanderfallen können, was die Arbeit des installierenden Personals ungemein erleichtert.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung sind in den Fig. dargestellt und wird in der nachfolgenden Beschreibung näher erläutert.

Hierzu zeigen:
- Fig. 1: eine schematische perspektivische Ansicht einer ersten Gehäusehälfte;
- Fig. 2: eine schematische perspektivische Ansicht der ersten Gehäusehälfte aus Fig. 1, die um 180 ° gedreht ist;
- Fig. 3: eine schematische seitliche Ansicht der ersten Gehäusehälfte mit einem vergrößerten Detail X;
- Fig. 4: eine schematische perspektivische Ansicht einer zweiten Gehäusehälfte mit einem Detail Y;
- Fig. 5: eine schematische perspektivische Ansicht der zusammengefügten ersten und zweiten Gehäusehälften;
- Fig. 6: eine schematische perspektivische Ansicht der zusammengefügten ersten und zweiten Gehäusehälften aus Fig. 5, die um 180 ° gedreht ist;
- Fig. 7: eine schematische perspektivische Ansicht der zusammengefügten ersten und zweiten Gehäusehälfte mit einem eingelegten Dichtelement;
- Fig. 8: eine schematische perspektivische Ansicht einer Einzelzugabdichtung.

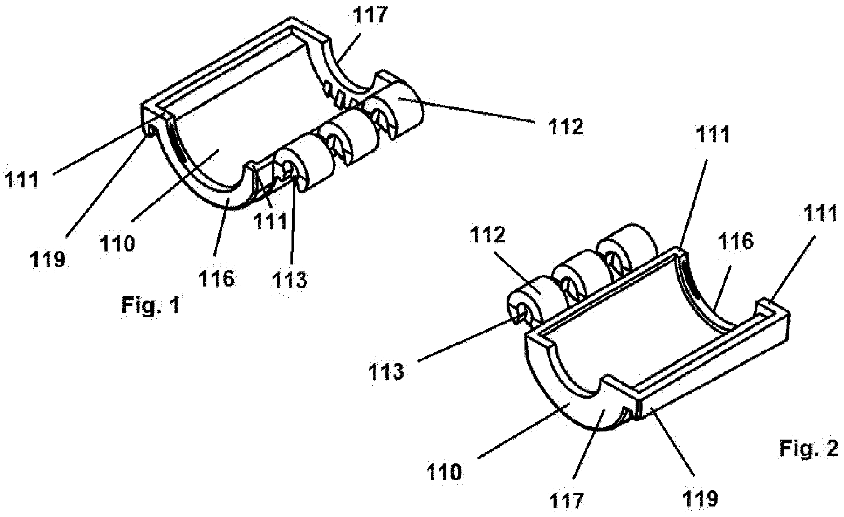

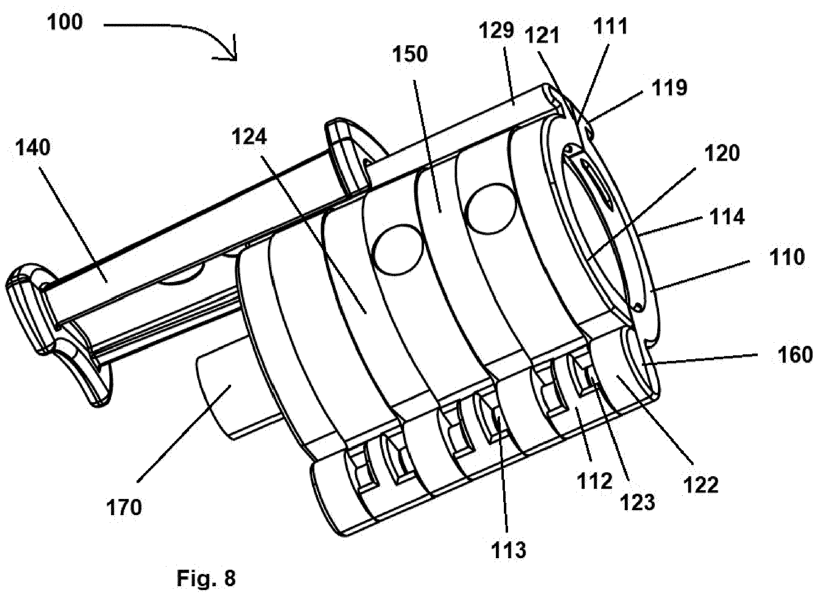

In der Fig. 1 ist eine schematische perspektivische Ansicht einer ersten Gehäusehälfte 110 der erfindungsgemäßen Einzelzugabdichtung 100, die später in Fig. 8 gezeigt ist, dargestellt.

Die erste Gehäusehälfte 110 ist schalenförmig ausgebildet und weist ganzheitlich eine erste Anlagefläche 111 auf. An der ersten Gehäusehälfte 110 ist ein erster Vorsprung 119 ausgebildet, der zum Verschließen des aus der ersten Gehäusehälfte 110 und der später gezeigten zweiten Gehäusehälfte 120 gebildeten Gehäuses 150 dient. Dem ersten Vorsprung 119 der ersten Gehäusehälfte 110 gegenüberliegend sind drei erste Scharniervorsprünge 112 ausgebildet. Jeder Scharniervorsprung 112 stellt einander gegenüberliegend jeweils zwei Achsaufnahmen 113 bereit, so dass sechs Achsaufnahmen 113 ausgebildet sind.

Die beiden äußeren der ersten Stirnseite 116 und der zweiten Stirnseite 117, die an der ersten Gehäusehälfte 110 ausgebildet sind, zugewandten Achsaufnahmen 113 sind so ausgeformt, dass die lichte Weite W des Durchgangs 118 zu diesen beiden Achsaufnahmen 113 kleiner ist, als die Achsdurchmesser D2 der Achsvorsprünge 123 der zweiten Scharniervorsprünge 122, die an der zweiten Gehäusehälfte 120 ausgebildet sind, wovon vier vorhanden sind, was später gezeigt wird.

Die restlichen vier Achsaufnahmen 113 an den ersten Scharniervorsprüngen 112 der ersten Gehäusehälfte 110 weisen keine lichte Weite W des Durchgangs 118 zu diesen Achsaufnahmen 113 auf, die kleiner ist, als die Achsdurchmesser D2 der Achsvorsprünge 123 der zweiten Scharniervorsprünge 122, die an der zweiten Gehäusehälfte 120 ausgebildet sind, sondern weisen eine lichte Weite des Durchgangs 118 auf, der geringfügig größer ist, als der Achsdurchmesser D2 der Achsvorsprünge 123.

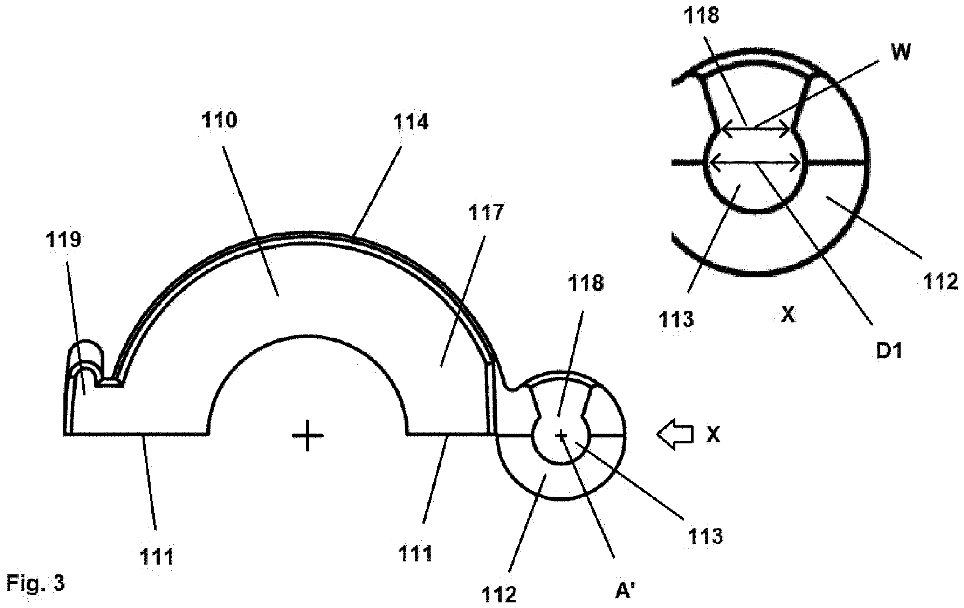

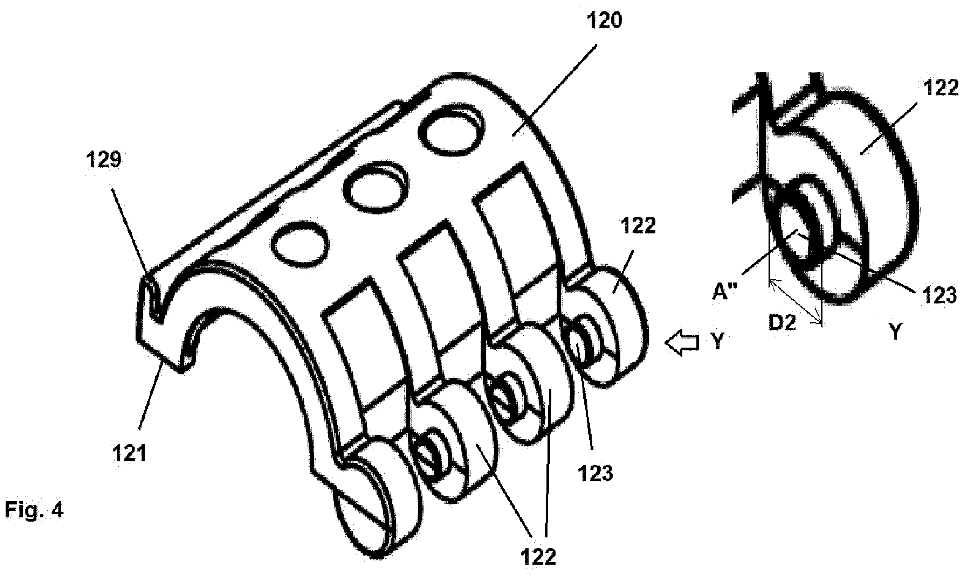

Die Details dazu sind in den Fig. 3 und 4 gezeigt.

In der Fig. 2 ist eine schematische perspektivische Ansicht der ersten Gehäusehälfte 110 aus Fig. 1 in einer um 180 ° gedrehten Ansicht dargestellt.

Die Bezugszeichen in Fig. 2 entsprechen denen aus Fig. 1.

Durch die gedrehte Ansicht der ersten Gehäusehälfte 110 in der Fig. 2 ist zu erkennen, dass an jedem der drei ersten Scharniervorsprünge 112 jeweils zwei einander gegenüberliegende Achsaufnahmen 113 ausgebildet sind.

Die erste Anlagefläche 111 der ersten Gehäusehälfte 110 bildet eine Ebene aus.

In der Fig. 3 ist eine schematische seitliche Ansicht der ersten Gehäusehälfte 110 aus Fig. 1 mit einem vergrößerten Detail X gezeigt.

Die Bezugszeichen in Fig. 3 entsprechen denen aus den vorangehenden Figuren.

Das erste Gehäuseteil 110 weist eine erste Anlagefläche 111 auf, die eine Ebene bildet, wobei die Achsaufnahme 113 am ersten Scharniervorsprung 112 eine Achse A aufweist, die in der vorstehend genannten Ebene liegt.

Die Achsaufnahme 113 ist zylindrisch ausgebildet bezüglich einer Achse A', sodass ein zylindrisch geformter Achsvorsprung 123, wie er in der Fig. 4 an der zweiten Gehäusehälfte 120 gezeigt ist, in diese einfügbar und dort drehbeweglich aufnehmbar ist.

Hierzu ist im Detail X in der Fig. 4 auf der rechten Seite gezeigt, dass der Aufnahmedurchmesser D1 größer ist, als der Achsdurchmesser D2 des Achsvorsprungs 123 aus der Fig. 4. Den Zugang zur Achsaufnahme 113 bildet ein Durchgang 118, dessen lichte Weite W kleiner ist als der Achsdurchmesser D2 des Achsvorsprungs 123 aus der Fig. 4.

Der Durchgang 118 mit einer lichten Weite W zur Achsaufnahme 113 ist nur an der Achsaufnahme 113 des Scharniervorsprungs 112 auf der der zweiten Stirnseite 117 der ersten Gehäusehälfte 110 zugewandten Seite des Scharniervorsprungs 112 ausgebildet, entsprechendes gilt für die hier nicht gezeigte gegenüberliegende Seite an der ersten Stirnseite 116 der ersten Gehäusehälfte 110 für den dort ausgebildeten Scharniervorsprung 112.

In der Fig. 4 ist eine schematische perspektivische Ansicht der zweiten Gehäusehälfte 120 mit einem vergrößerten Detail Y dargestellt.

Die Bezugszeichen in Fig. 4 entsprechen denen aus den vorangehenden Figuren.

Am zweiten Gehäuseteil 120 sind vier Scharniervorsprünge 122 ausgebildet, an denen jeweils ein oder zwei Achsvorsprünge 123 angeformt sind.

Das Detail Y in der Fig. 4 auf der rechten Seite zeigt in einer vergrößerten Darstellung den Achsvorsprung 123, der an dem zweiten Scharniervorsprung 122 der zweiten Gehäusehälfte 120 ausgebildet ist. Der Achsvorsprung 123 ist zylindrisch ausgebildet bezüglich einer Achse A" mit einem Achsdurchmesser D2. Die Achse des Achsvorsprungs 123 liegt in der Ebene der zweiten Anlagefläche 121 des zweiten Gehäuseteils 120.

Der Achsdurchmesser D2 des Achsvorsprungs 123 ist größer, als die lichte Weite W des Durchgangs 118 zur Achsaufnahme 113, die am ersten Scharniervorsprung 112 der ersten Gehäusehälfte 110 ausgebildet ist.

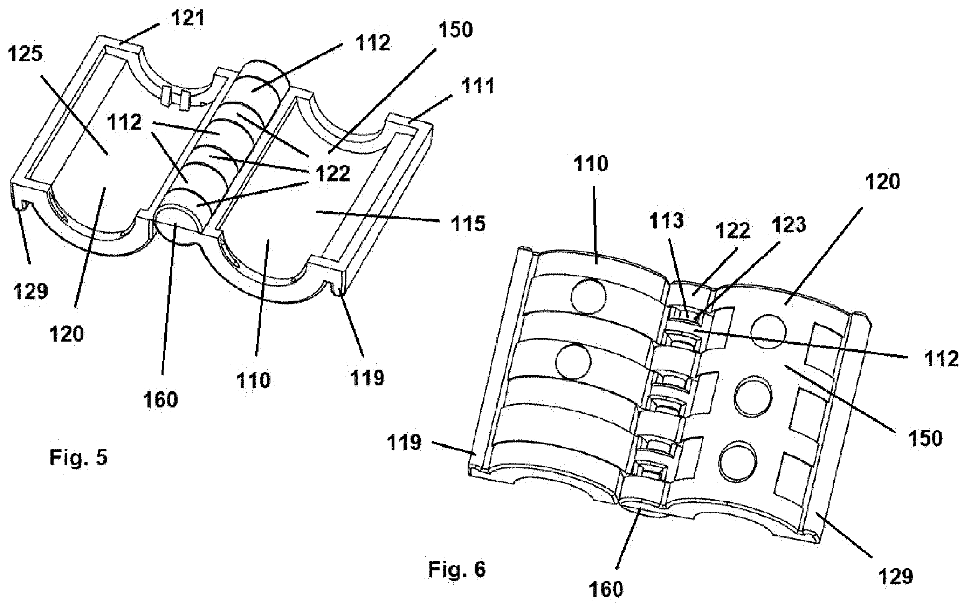

Die Fig. 5 zeigt die zusammengefügten erste und zweite Gehäusehälften 110, 120 in einer schematischen perspektivischen Ansicht.

Die Bezugszeichen in Fig. 5 entsprechen denen aus den vorangehenden Figuren.

Die erste Gehäusehälfte 110, an drei erste Scharniervorsprünge 112 ausgebildet sind, und die zweite Gehäusehälfte 120, an der vier zweite Scharniervorsprünge 122 ausgebildet sind, sind unter Ausbildung eines Scharniers 160 miteinander zum Gehäuse 150 zusammengefügt.

Die in den Fig. 3 und 4 gezeigten Achsen A', A" der Achsaufnahme 113 und des Achsvorsprungs 123 fluchten hierbei - was aber in der Fig. 5 nicht erkennbar ist.

Die Beweglichkeit des Scharniers 160 ist dadurch sichergestellt, dass der Achsdurchmesser D2 des Achsvorsprungs 123 geringfügig kleiner ist als der Achsaufnahmedurchmesser D1 der Achsaufnahme 113.

Die Achsen A' und A" liegen beim Gehäuse 150, das durch Zusammenfügen der ersten Gehäusehälfte 110, an drei erste Scharniervorsprünge 112 ausgebildet sind, und der zweite Gehäusehälfte 120, an der vier zweite Scharniervorsprünge 122 ausgebildet sind, unter Ausbildung eines Scharniers 160 zum einen in der Ebene, die durch die erste Anschlagfläche 111 definiert ist, und zum anderen in der Ebene, die durch die zweite Anschlagfläche 121 definiert ist.

Damit wird das Verschwenken der beiden Gehäusehälften 110, 120 gegeneinander ermöglicht.

Die Fig. 6 zeigt die zusammengefügten erste und zweite Gehäusehälften 110, 120 aus Fig. 5 in einer schematischen perspektivischen Ansicht, die um 180 ° gedreht ist.

Die Bezugszeichen in Fig. 6 entsprechen denen aus den vorangehenden Figuren.

An der ersten Gehäusehälfte 110 sind drei erste Scharniervorsprünge 112 ausgebildet, durch welche Achsaufnahmen 113 bereitgestellt werden.

An der zweiten Gehäusehälfte 120 sind vier zweite Scharniervorsprünge 122 ausgebildet, durch welche Achsvorsprünge 123 bereitgestellt werden.

An den Scharniervorsprüngen 112, 122 sind die erste Gehäusehälfte 110 und die zweite Gehäusehälfte 120 unter Ausbildung eines Scharniers 160 miteinander verbunden, indem die Achsvorsprünge 123 der zweiten Scharniervorsprünge 122 der zweiten Gehäusehälfte 120 in die jeweiligen Achsaufnahmen 113 der ersten Scharniervorsprünge 112 der ersten Gehäusehälfte 110 eingerastet sind.

Es versteht sich, dass auch andere Anzahlen an ersten Scharniervorsprüngen 112 und zweiten Scharniervorsprüngen 122 möglich sind.

Das Gehäuse 150, gebildet aus der ersten Gehäusehälfte 110 und der zweiten Gehäusehälfte 120, das durch Zusammenfügen unter Ausbildung eines Scharniers 160 bereitgestellt ist, weist an den Rändern der beiden Gehäusehälften 110, 120, die den Scharniervorsprüngen 112, 122 gegenüberliegen, Vorsprünge 119, 129 auf. Hierbei ist an der ersten Gehäusehälfte 110 ein erster Vorsprung 119 ausgebildet, an der zweiten Gehäusehälfte 120 ein zweiter Vorsprung 129.

Die Vorsprünge 119, 120 dienen dazu, dass das Gehäuse 150 in geschlossenem Zustand mithilfe eines Verbindungselement 140, was in Fig. 8 gezeigt ist, zusammengezogen wird, wodurch das im Gehäuse 150 aufgenommene Dichtelement 170 komprimiert wird und so seine Dichtwirkung entfaltet.

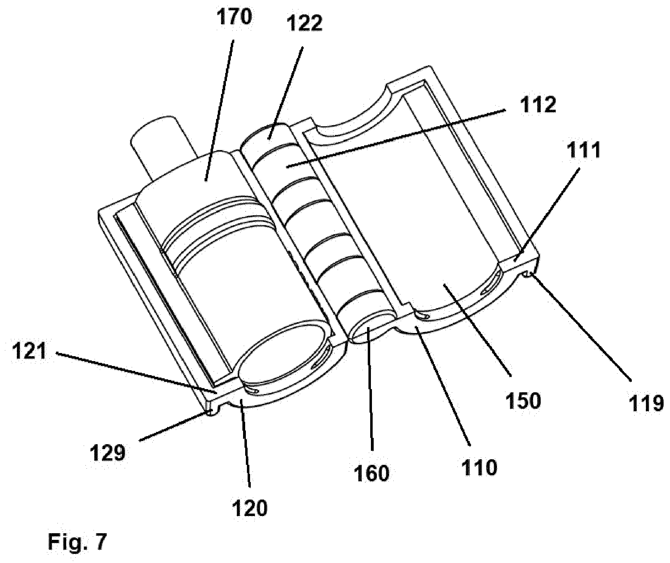

Die Fig. 7 zeigt die zusammengefügten erste und zweite Gehäusehälften 110, 120 aus Fig. 5 in einer schematischen perspektivischen Ansicht mit einem eingelegten Dichtelement 170.

Die Bezugszeichen in Fig. 7 entsprechen denen aus den vorangehenden Figuren.

In das Gehäuse 150, das durch Zusammenfügen der ersten Gehäusehälfte 110 und der zweiten Gehäusehälfte 120 unter Ausbildung eines Scharniers 160 entstanden ist, ist das Dichtelement 170 eingelegt.

Durch Verschwenken der ersten Gehäusehälfte 110 gegenüber der zweiten Gehäusehälfte 120, welche das Scharnier 160 ermöglicht, kann das Dichtelement 170 von den beiden Gehäusehälften 110, 120 umschlossen werden.

In der Fig. 8 ist die erfindungsgemäße Einzelzugabdichtung 100 in einer schematischen perspektivischen Ansicht dargestellt.

Die Bezugszeichen in Fig. 8 entsprechen denen aus den vorangehenden Figuren.

Die Einzelzugabdichtung 100 umfasst das Gehäuse 150 aus den beiden Gehäusehälften 110, 120, die gelenkig durch das Scharnier 160 miteinander verbunden sind, das im Gehäuse 150 aufgenommene Dichtelement 170 und das Verbindungselement 140 in Form eines Schiebers, durch das die beiden Gehäusehälften 110, 120 zusammengezogen werden, wodurch das Dichtelement 170 komprimiert wird und so seine Dichtwirkung entfaltet.

Das Dichtelement 170 ist ein Formkörper aus einem Elastomermaterial, wie beispielsweise einem Gummi, einem Kautschuk, einem Silikonkautschuk, einem Nitril-Butadien-Kautschuk, einem thermoplastischen Elastomer oder dergleichen.

Das Dichtelement 170 ist formstabil ausgebildet und besitzt zumindest abschnittsweise eine hohlzylindrische Form.

Hierbei kommt die erste Anlagefläche 111 der ersten Gehäusehälfte 110 mit der zweiten Anlagefläche 121 der zweiten Gehäusehälfte 120 in Anlage und stellt so eine definierte Positionierung der beiden Gehäusehälften 110, 120 im Zustand des geschlossenen Gehäuses 150 bereit.

Der Einfachheit halber ist in der Fig. 8 weder das Kabelrohrende, dass in der Fig. 8 rechts sich an das Ende der Einzelzugabdichtung 100 anschließend zu denken wäre, noch das Telekommunikationskabel, das aus dem Dichtelement 170 links herausragen würde, dargestellt.

### Bezugszeichenliste

- 100: Einzelzugabdichtung
- 110: erste Gehäusehälfte
- 111: erste Anlagefläche
- 112: erster Scharniervorsprung
- 113: Achsaufnahme
- 114: Gehäuseaußenoberfläche
- 115: Gehäuseinnenoberfläche
- 116: erste Stirnseite
- 117: zweite Stirnseite
- 118: Durchgang
- 119: erster Vorsprung
- 120: zweite Gehäusehälfte
- 121: zweite Anlagefläche
- 122: zweiter Scharniervorsprung
- 123: Achsvorsprung
- 124: Gehäuseaußenoberfläche
- 125: Gehäuseinnenoberfläche
- 129: zweiter Vorsprung
- 140: Verbindungselement
- 150: Gehäuse
- 160: Scharnier
- 170: Dichtelement
- A': Achse
- A": Achse
- D1: Achsaufnahmedurchmesser
- D2: Achsdurchmesser
- W: lichte Weite
- X: Detail
- Y: Detail

## Patentansprüche

1. Einzelzugabdichtung (100) mit einem Dichtelement (170) zum Umschließen eines Kabels oder Kabelrohres und einem das Dichtelement (170) zumindest teilweise umgebenden mehrteiligen Gehäuse (150) mit einem Innenquerschnitt quer zum Kabel oder Kabelrohr, welcher kleiner ist als der Querschnitt des Dichtelements (170) quer zum Kabel oder Kabelrohr, wobei zwei Teile (110, 120) des Gehäuses (150) als Gehäusehälften (110, 120) gelenkig miteinander verbindbar sind, und wobei das Gehäuse (150) von einem Verbindungselement (140) zusammengehalten ist, **dadurch gekennzeichnet, dass** eine erste Gehäusehälfte (110) mit wenigstens einem ersten Scharniervorsprung (112) und eine zweite Gehäusehälfte (120) mit wenigstens einem zweiten Scharniervorsprung (122) ausgebildet sind, wobei der erste Scharniervorsprung (112) der ersten Gehäusehälfte (110) und der zweite Scharniervorsprung (122) der zweiten Gehäusehälfte (120) zur Bildung eines Scharniers (160) zusammenfügbar sind, um die erste Gehäusehälfte (110) und die zweite Gehäusehälfte (120) gegeneinander zu verschwenken, wobei der zweite Scharniervorsprung (122) der zweiten Gehäusehälfte (120) wenigstens einen Achsvorsprung (123) aufweist, dessen Achsdurchmesser D2 größer ist als die lichte Weite W des Durchgangs (118) zur wenigstens einen Achsaufnahme (113), die am ersten Scharniervorsprung (112) der ersten Gehäusehälfte (110) ausgebildet ist.

2. Einzelzugabdichtung (100) nach Anspruch 1, **dadurch gekennzeichnet, dass** eine Mehrzahl von ersten Scharniervorsprüngen (112) an der ersten Gehäusehälfte (110) und eine Mehrzahl von zweiten Scharniervorsprüngen (122) an der zweiten Gehäusehälfte (120) ausgebildet sind, wobei jeweils eine gleiche Mehrzahl an ersten Scharniervorsprüngen (112) und zweiten Scharniervorsprüngen (122) oder wobei eine ungleiche Mehrzahl an ersten Scharniervorsprüngen (112) und zweiten Scharniervorsprüngen (122) vorliegt.

3. Einzelzugabdichtung (100) nach einem der Ansprüche 1 oder 2, **dadurch gekennzeichnet, dass** die Mehrzahl an zweiten Scharniervorsprüngen (122) an der ersten Gehäusehälfte (110) jeweils gleichgeformt sind.

4. Einzelzugabdichtung (100) nach einem der Ansprüche 2 oder 3, **dadurch gekennzeichnet**, die Mehrzahl zwei oder drei oder vier oder fünf oder sechs oder sieben oder acht beträgt.

5. Einzelzugabdichtung (100) nach einem der vorangehenden Ansprüche, **dadurch gekennzeichnet, dass** an der ersten Gehäusehälfte (110) eine erste Anlagefläche (111) ausgebildet ist, und dass an der Gehäuseaußenoberfläche (114) der ersten Gehäusehälfte (110) der erste Scharniervorsprung (112) angrenzend an die erste Anlagefläche (111) und gegenüberliegend einem ersten Vorsprung (119) an der Gehäuseaußenoberfläche (114) ausgeformt ist.

6. Einzelzugabdichtung (100) nach einem der Ansprüche 1 bis 4, **dadurch gekennzeichnet, dass** an der zweiten Gehäusehälfte (120) eine zweite Anlagefläche (121) ausgebildet ist, und dass an der Gehäuseaußenoberfläche (124) der zweiten Gehäusehälfte (120) der zweite Scharniervorsprung (122) angrenzend an die zweite Anlagefläche (121) und gegenüberliegend einem zweiten Vorsprung (129) an der Gehäuseaußenoberfläche (124) ausgeformt ist.

7. Einzelzugabdichtung (100) nach einem der vorangehenden Ansprüche, **dadurch gekennzeichnet, dass** der zweite Scharniervorsprung (122) der zweiten Gehäusehälfte (120), der einen Achsvorsprung (123) aufweist, einen Achsdurchmesser D2 des Achsvorsprungs (123) besitzt, der kleiner ist als der Achsaufnahmedurchmesser D1, den die Achsaufnahme (113) besitzt, die der erste Scharniervorsprung (112) der ersten Gehäusehälfte (110) aufweist.

8. Einzelzugabdichtung (100) nach einem der vorangehenden Ansprüche, **dadurch gekennzeichnet, dass** die erste Gehäusehälfte (110) und / oder die zweite Gehäusehälfte (120) und / oder das Verbindungselement (140) aus einem Polymermaterial bestehen oder ein solches enthalten, wobei das Polymermaterial ein Thermoplast ist, und insbesondere ein verstärkter Thermoplast ist.

9. Einzelzugabdichtung (100) nach einem der vorangehenden Ansprüche, **dadurch gekennzeichnet, dass** die erste Gehäusehälfte (110) und / oder die zweite Gehäusehälfte (120) und / oder das Verbindungselement (140) durch einen Formprozess hergestellt sind, insbesondere durch einen Spritzgussprozess und / oder durch einen generativen Herstellprozess, wie einen 3D-Druck-Prozess.

10. Telekommunikationssystem mit wenigstens einem Kabelrohr, wenigstens einem Telekommunikationskabel, das zumindest abschnittsweise in dem Kabelrohr aufgenommen ist, und wenigstens einer Einzelzugabdichtung (100) nach einem der Ansprüche 1 bis 9, die das Ende des Kabelrohrs verschließt.
